# EUROPÄISCHE PATENTANMELDUNG

(11) **EP 1 175 849 A1**
(43) Veröffentlichungstag der Anmeldung: **30.01.2002**
(21) Anmeldenummer: 01118098.1
(22) Anmeldetag: 26.07.2001
(51) Int. Cl.: A47B 23/04, G06F 1/16

(54) **Computer-Arbeitsplatz**

(30) Priorität: 26.07.2000 DE 20012879 U
(71) Anmelder: Sembritzki, Edwin, Dipl.-Ing., 44795 Bochum (DE)
(72) Erfinder: Sembritzki, Edwin, Dipl.-Ing., 44795 Bochum (DE)
(74) Vertreter: Behrendt, Arne, Dipl.-Ing.

(57) **Zusammenfassung**

Die Erfindung betrifft einen Computer - Arbeitsplatz mit einem Notebook (1), mit einem flachen im wesentlichen rechteckigen Unterteil (2) mit Tastatur (3) und einem flachen, im wesentlichen rechteckigen Oberteil (4) mit einem Bildschirm (5) oder Display, wobei das Oberteil (4) mit dem Unterteil (2) beweglich verbunden ist. Ein großer Nachteil des bisher ständig stattfindenden Wechsels von dem Notebook (1) zu dem stationärem Computer - Arbeitsplatz liegt in dem stets erforderlichen Abgleich dieser Systeme. Es ist Aufgabe der Erfindung einen Computer - Arbeitsplatz zu schaffen, welcher das Arbeiten unter ergonomisch optimalen Bedingungen ermöglicht. Die Aufgabe wird dadurch gelöst, daß das Unterteil (2) mit einer Standvorrichtung (13) ausgestattet ist, so daß es zu einer Standfläche einen Winkel zwischen 10° und 90° ausbildet, wobei das Unterteil (2) zum Oberteil (4) hin ansteigend angeordnet ist. Der große Vorteil des erfindungsgemäßen mobilen Computer-Arbeitsplatzes liegt in der optimalen Anordnung des Bildschirms (5) zu dem Benutzer.

## Beschreibung

Die Erfindung betrifft einen Computer-Arbeitsplatz mit einem aufklappbaren, transportablen Computer, bzw. Notebook, mit einem flachen im wesentlichen rechteckigen Unterteil mit Tastatur und einem flachen, im wesentlichen rechtekkigen Oberteil mit einem Bildschirm oder Display, wobei das Oberteil mit dem Unterteil beweglich verbunden ist.

Notebooks sind aus dem modernen Geschäftsleben nicht mehr wegzudenken. Der mobile Einsatz der elektronischen Datenverarbeitung ermöglicht eine flexible Arbeitseinteilung und besonders effiziente Zeitnutzung. Um ein Notebook jedoch sinnvoll nutzen zu können, ist es unabdingbar, daß auf dem Notebook die gleiche Software betrieben werden kann, wie sie auf dem stationären Arbeitsplatzrechner betrieben wird. Dies setzt wiederum eine vergleichbare Leistungsfähigkeit der Systeme voraus.

Da es äußerst kostspielig ist, sowohl eine transportable als auch eine stationäre elektronische Datenverarbeitung mit vergleichbarer Leistungsfähigkeit bereitzustellen und darüber hinaus ein ständiger Abgleich dieser Systeme erforderlich ist, werden im privaten und gewerblichen Bereich Arbeitsplatzrechner im hohen Maße durch leistungsfähige Notebooks ersetzt.

Der bloße Ersatz eines stationären Arbeitsplatzrechners an einem ergonomisch gestalteten Computer - Arbeitsplatz durch ein Notebook bringt jedoch für den Benutzer große Nachteile mit sich. Zum einen ist die Tastatur in dem Unterteil des Notebooks sehr kompakt und unvorteilhaft angeordnet, weshalb die Bedienung verglichen mit einem herkömmlichen stationären Computer - Arbeitsplatz äußerst unkomfortabel ist. Zum anderen ist der Bildschirm des Notebooks nie optimal zu dem Benutzer positioniert, da die feste Einheit aus Tastatur und Bildschirm stets eine geringe Sichtentfernung bedingt und entweder der Bildschirm für einen normal gewachsenen Menschen zu niedrig angeordnet ist oder die Tastatur zu hoch. Aus diesem Grund kann der permanente ausschließliche Gebrauch eines Notebooks zu Haltungsbeschwerden und Erkrankungen der Wirbelsäule führen.

Ausgehend von den beschriebenen Nachteilen im Stand der Technik liegt der Erfindung daher die Aufgabe zugrunde, einen Computer - Arbeitsplatz der eingangs genannten Art zu schaffen, welcher das Arbeiten unter ergonomisch optimalen Bedingungen ermöglicht.

Erfindungsgemäß wird die Aufgabe dadurch gelöst, daß das Unterteil mit einer Standvorrichtung ausgestattet ist, so daß es zu einer Standfläche einen Winkel zwischen 10° und 90° ausbildet, wobei das Unterteil zum Oberteil hin ansteigend angeordnet ist.

Der große Vorteil des erfindungsgemäßen mobilen Computer-Arbeitsplatzes liegt in der optimalen Anordnung des Bildschirms zu dem Benutzer. Der Benutzer kann nun das Notebook gemeinsam mit der Standvorrichtung auf einem gewöhnlichen Schreibtisch anordnen und die Höhe des Bildschirms an die Höhe seiner Augen anpassen. Auf diese Weise ist es erstmals möglich, ergonomisch korrekt mit einem Notebook an einem Schreibtisch zu arbeiten. Der gesundheitsbewußte Benutzer ist nicht mehr gezwungen, zur Vermeidung des ergonomischen Kompromisses, einen stationären und einen portablen Computer - Arbeitsplatz einzurichten. Das Notebook mit der erfindungsgemäßen Standvorrichtung ermöglicht eine elektronische Datenverarbeitung sowohl im stationären als auch im portablen Einsatz unter optimalen ergonomischen Bedingungen.

Eine vorteilhafte Weiterbildung der Erfindung sieht vor, daß die Standvorrichtung ein integraler Bestandteil des Notebooks ist. Auf diese Weise wird der Benutzer bei der Einrichtung eines ergonomisch optimalen Computer - Arbeitsplatzes vollkommen unabhängig von dem Vorhandensein einer externen Standvorrichtung, da er diese immer mit seinem Notebook mitführt. Durch die Integration der erfindungsgemäßen Standvorrichtung in das Notebook ist es dem Benutzer außerdem unmöglich die Standvorrichtung im heimischen Büro zu vergessen oder irgendwo sonst zurück zu lassen.

Eine sinnvolle Ausführungsform des erfindungsgemäßen Computer - Arbeitsplatzes sieht vor, daß die Standvorrichtung mindestens eine Stütze umfaßt, welche bei Bedarf aus der Unterseite des Unterteils des Computers flügelartig ausgeklappt werden kann. Eine solche Standvorrichtung läßt sich kostengünstig in die Fertigung von Notebookgehäusen integrieren. Das flügelartige Ausklappen der Standvorrichtung aus dem Unterteil des Gehäuses bereitet dem Benutzer keine Mühen und hat den sicheren Stand des Computers zur Folge.

Alternativ kann aber die Standvorrichtung auch in Form zweier ausfahrbarer Stützen in das Oberteil des Notebooks integriert sein. Insbesondere bei in verschiedenen Positionen verrastbaren Stützen ist eine Anpassung an die jeweilige Höhe des Arbeitsplatzes problemlos möglich. Teleskopartig ausziehbare Stützen im Oberteil des Notebooks sind ebenfalls möglich.

Damit der Computer - Arbeitsplatz nicht nur hinsichtlich der Bildschirmposition optimiert ist, ist es zweckmäßig, wenn die Tastatur in dem Unterteil beweglich angeordnet ist, so daß die Tastatur aus dem Unterteil mindestens zum Teil zu der Seite herausgezogen oder herausgeklappt werden kann, welche der gelenkigen Verbindung zum Bildschirm gegenüberliegt. Unter Beibehaltung der Einheit von Bildschirm, Gehäuseunterteil und Tastatur ist es mit dieser erfindungsgemäßen Ausgestaltung möglich, nicht nur den Bildschirm ergonomisch optimal anzuordnen, sondern auch die Tastatur benutzergerecht im richtigen Abstand zum Bildschirm zu bedienen.

Eine vorteilhafte Weiterbildung des erfindungsgemäßen Computerarbeitsplatzes sieht vor, daß die Tastatur aus dem Unterteil herausgenommen und extern benutzt werden kann. Zur Übertragung der Tastenbetätigung von der Tastatur zu dem Computer ist es weiterhin möglich, die Tastatur mit dem Computer mittels eines Kabels zu verbinden oder die Übertragung kabellos vorzunehmen. Sowohl bei einer Verbindung der Tastatur mit dem Computer mittels eines Kabels, als auch bei kabelloser Datenübertragung verfügt der Benutzer über eine vorteilhafte Freiheit bei der Anordnung der Tastatur an seinem Arbeitsplatz. Der Benutzer kann die Tastatur direkt vor dem Computer und dem Bildschirm auf seinem Schreibtisch anordnen oder nach belieben auch beispielsweise an einem entfernten Stehpult benutzen.

Die Standvorrichtung kann auch als separater Bestandteil des erfindungsgemäßen Arbeitsplatzes ausgebildet sein. Dieses Vorgehen eröffnet insbesondere die Möglichkeit der Nachrüstung der erfindungsgemäßen Standvorrichtung.

Eine besonders robuste Ausführung der Standvorrichtung ergibt sich, wenn diese eine waagerechte Grundplatte umfaßt, auf welcher ein Gestell die Ablage des Computers im dem gewünschten Winkel erlaubt. Besonders vorteilhaft ist eine solche Standvorrichtung, wenn sie ausschließlich für den stationären Einsatz in einem bestimmten Büro benutzt wird. Die Grundplatte gewährleistet stets einen sicheren Stand der Anordnung auf der Aufstellfläche.

Ebenfalls gut geeignet ist eine Standvorrichtung, welche aus zwei im wesentlichen identisch geformten, rechteckigen, flächigen Seitenteilen besteht, welche jeweils eine schräg zur Aufstellfläche orientierte Kante aufweisen, wobei das Unterteil des Computers auf diesen beiden Kanten abgelegt wird. Eine solche Standvorrichtung ist besonders einfach zu fertigen und macht einen sehr massiven und zugleich ästhetisch vorteilhaften Eindruck.

Zweckmäßigerweise weist die Standvorrichtung einen Vorsprung auf, gegen den sich das Notebook mit seiner dem Benutzer zugewandten Seite abstützt. Für eine rutschsichere Aufstellung können am Notebook und/oder an der Standvorrichtung aus Gummi oder Kunststoff bestehende Rutschsicherungen angeordnet sein.

Eine vorteilhafte Weiterbildung der Erfindung sieht vor, daß die Standvorrichtung Mittel zur Fixierung der von dem Notebook ausgehenden Kabel aufweist. Beispielsweise kann es sich dabei um leicht zu öffnende Kabelkanäle oder Klettverschlüsse handeln.

Eine andere zweckmäßige Ausbildung der Erfindung sieht vor, daß die dreieckigen, flächigen Seitenteile jeweils als nicht gleichschenkliges Dreieck ausgebildet sind und die übrigen beiden Kanten der dreieckigen, flächigen Seitenteile, die nicht der Auflage des Notebooks dienen, jeweils paarweise alternativ der Standvorrichtung in Gebrauchsposition als Auflager dienen. Diese robuste Ausführung der Standvorrichtung kann einstückig ausgebildet sein und ermöglicht dennoch unterschiedliche Neigungen.

Für verschiedene Anwendungen ist es sinnvoll, wenn die Standvorrichtung mehrteilig ist und bedarfsgerecht für verschiedenen Winkelstellungen des Notebooks zusammensetzbar ist. So kann ein als Anlage für das Notebook dienender Vorsprung abnehmbar gestaltet sein und an eine in mehreren Positionen nutzbare Standvorrichtung an der unteren Kante befestigt werden.

Vorteilhaft ist auch die Ausbildung der Standvorrichtung mit einer länglichen Verzahnung, in deren Zähne sich eine Stütze abstützt, welche die Auflagefläche der Standvorrichtung für das Notebook abstützt. So kann die Neigung wie bei einem Gartenstuhl verstellt werden. Für den Transport läßt sich die Vorrichtung platzsparend zusammenklappen.

Im folgenden wird die Erfindung anhand einiger spezieller Ausführungsbeispiele mit Bezug auf die zugehörigen Zeichnungen näher erläutert. Es zeigen:
- Fig. 1:: Ein erfindungsgemäßes Notebook in Seitenansicht mit flügelartig ausklappbarer Standvorrichtung,
- Fig. 2:: das Notebook von Fig. 1 mit nicht ausgeklappter erfindungsgemäßer Standvorrichtung,
- Fig. 3:: das Notebook von Fig. 1 und 2 mit teilweise ausgeklappter erfindungsgemäßer Standvorrichtung,
- Fig. 4:: ein Notebook mit erfindungsgemäßer Standvorrichtung,
- Fig. 5:: ein Notebook mit erfindungsgemäßer Standvorrichtung und ausgefahrener Tastatur,

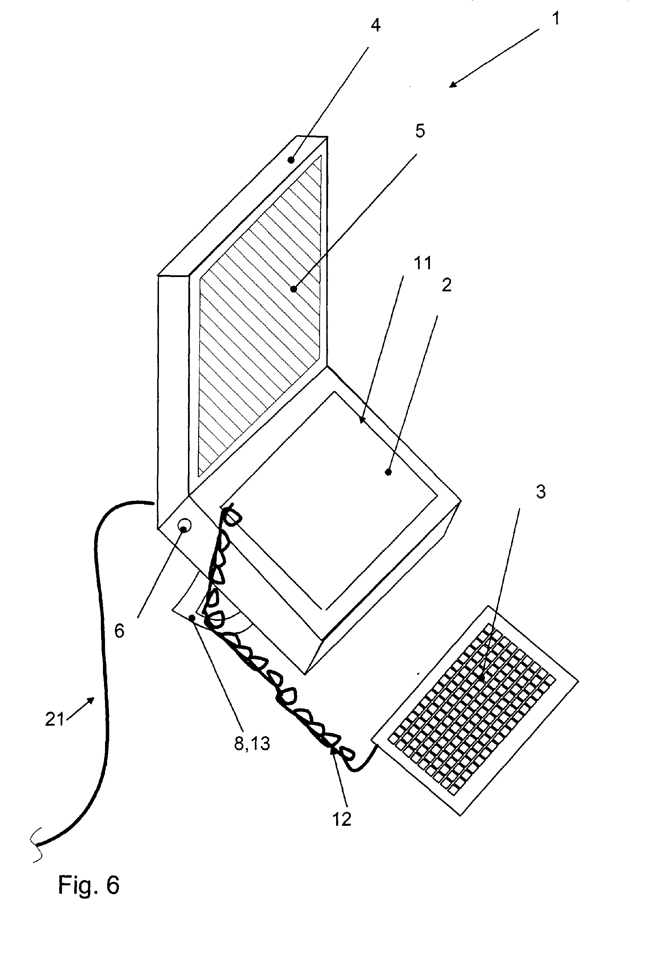

- Fig. 6:: ein Notebook mit erfindungsgemäßer Standvorrichtung und herausgenommener Tastatur,

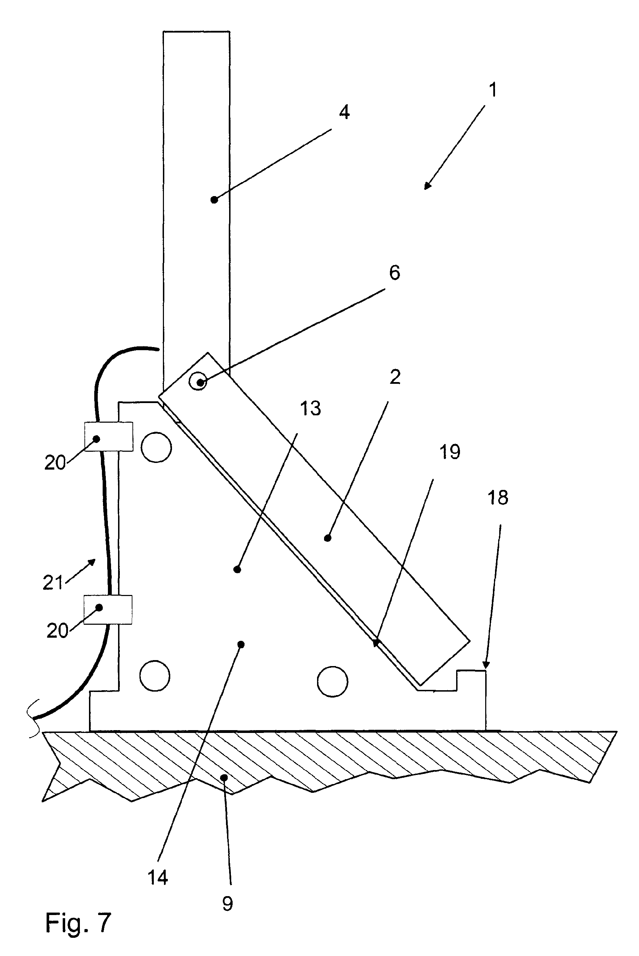

- Fig. 7:: ein Notebook angeordnet auf einer erfindungsgemäßen Standvorrichtung, in Seitenansicht,

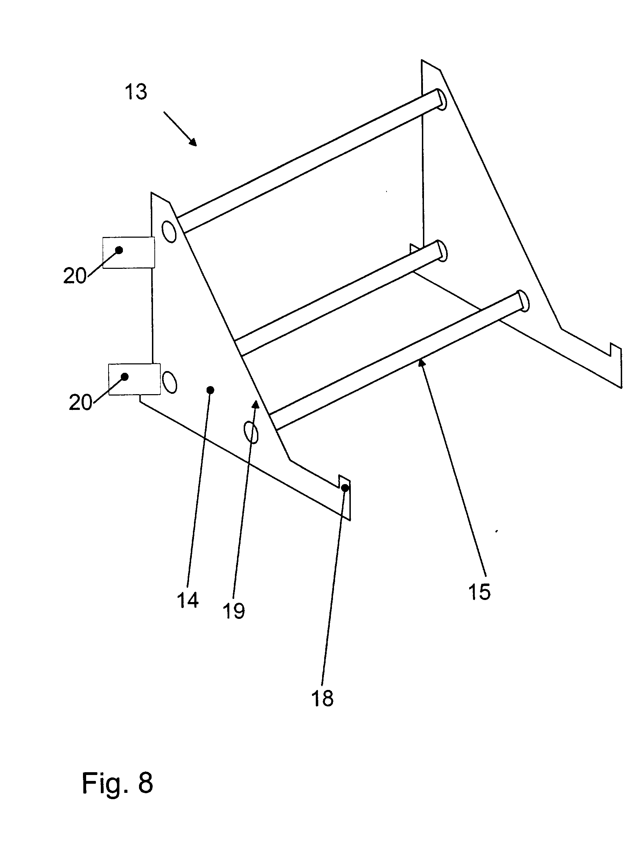

- Fig. 8:: eine erfindungsgemäße verwendbare Standvorrichtung,

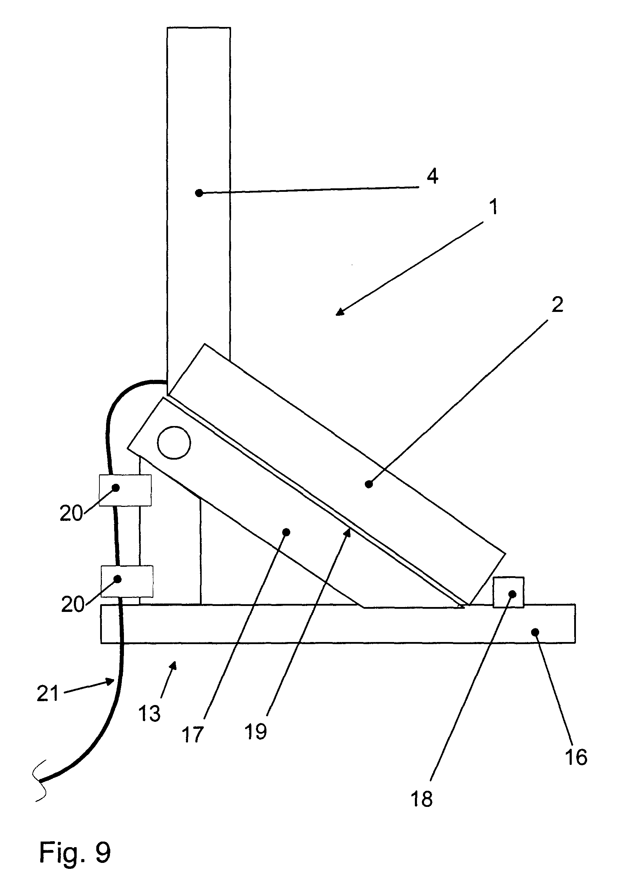

- Fig. 9:: ein Notebook angeordnet auf einer erfindungsgemäßen Standvorrichtung,

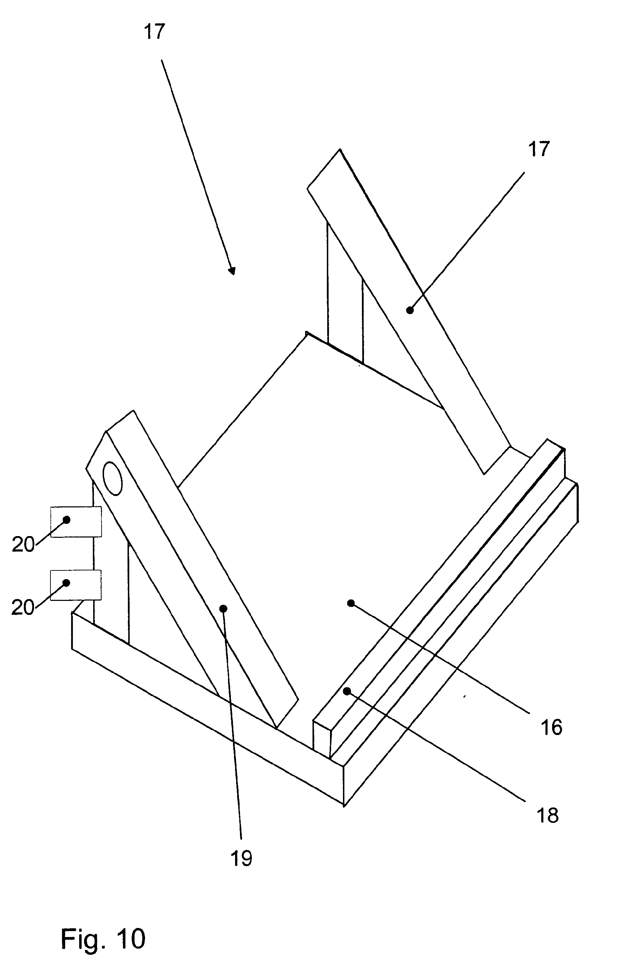

- Fig. 10:: eine weitere Ausführungsform der erfindungsgemäßen Standvorrichtung,
- Fig. 11:: eine erfindungsgemäße Standvorrichtung, die als nicht gleichschenkliges Dreieck ausgebildet ist und in den zwei unterschiedlichen Aufstellpositionen nebeneinander abgebildet ist, und
- Fig. 12:: eine weitere Ausführungsform der erfindungsgemäßen Standvorrichtung mit einer Neigungsverstellung für das Notebook.

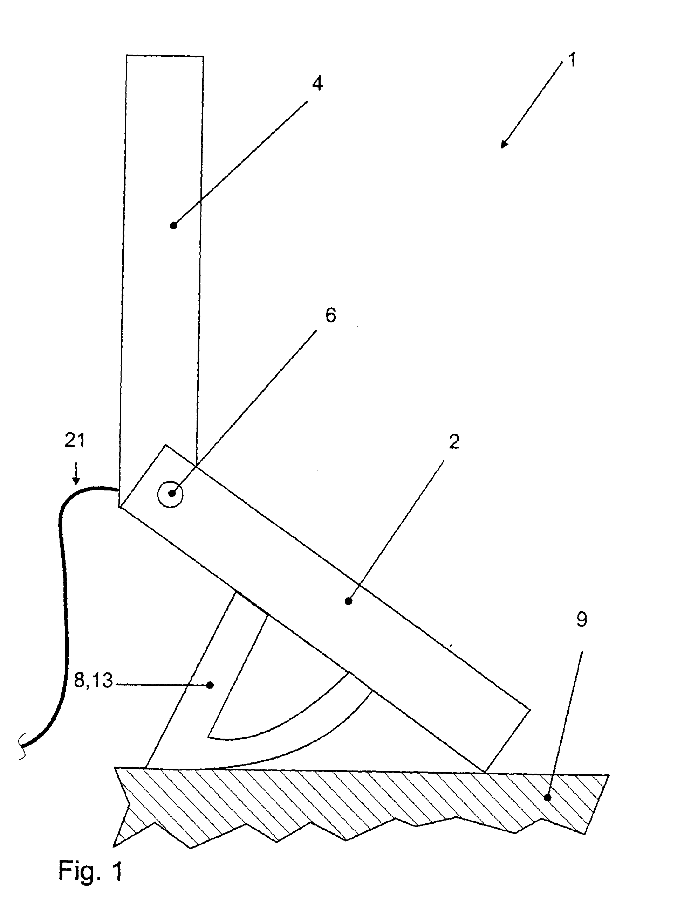

Der transportable Computer oder auch das Notebook 1 gemäß Fig 1 bis 4, besteht aus einem Unterteil 2, in welchem die Tastatur 3 angeordnet ist, und einem Oberteil 4, in welchem der Bildschirm 5 angeordnet ist. Das Unterteil 2 ist mit dem Oberteil 4 in einer ersten Drehachse 6 gelenkig verbunden.

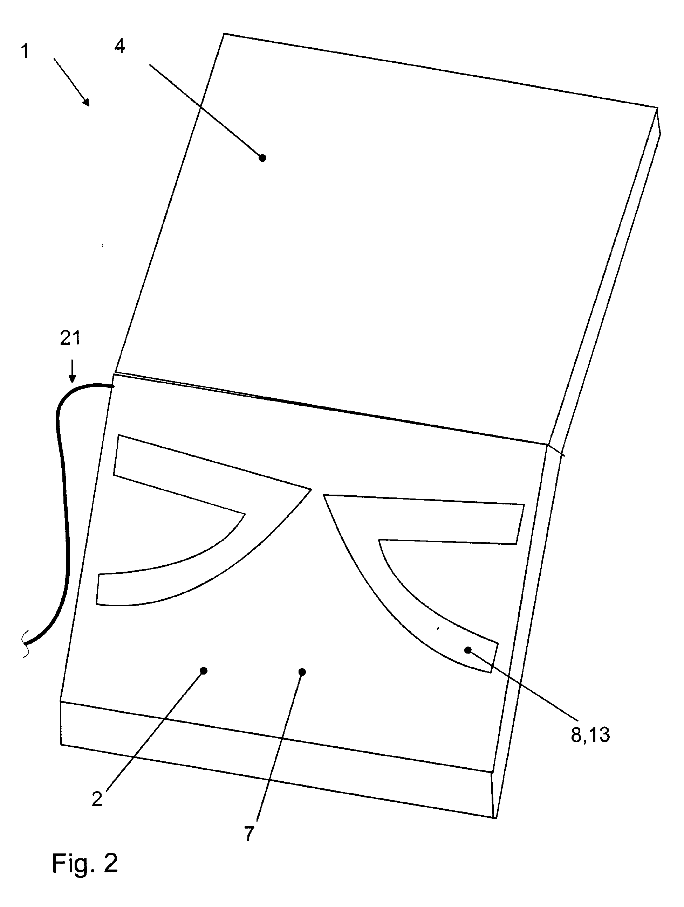

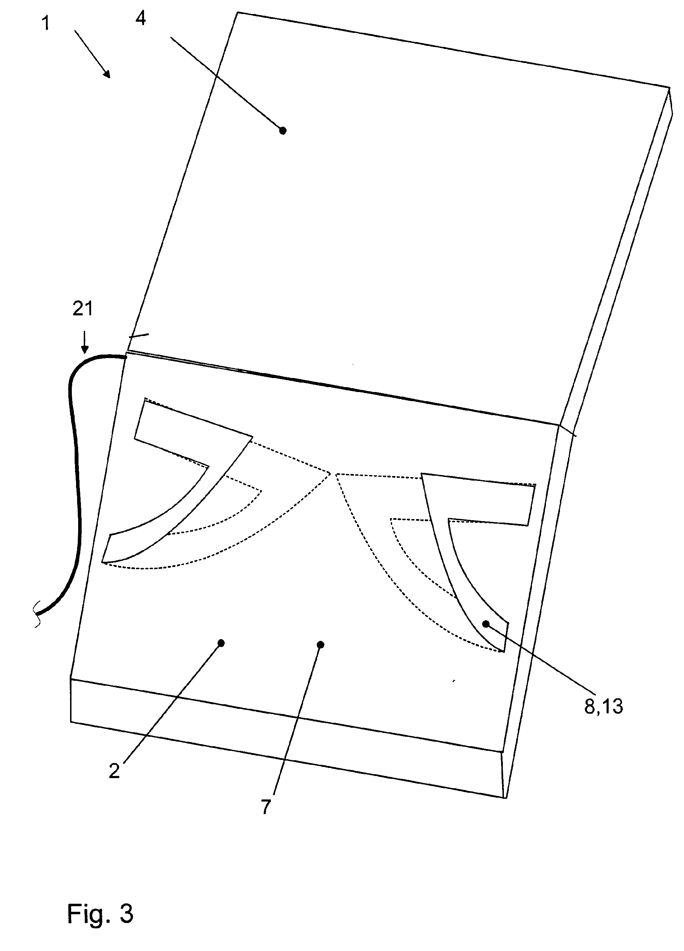

Erfindungsgemäß kann das Notebook 1 in eine ergonomisch vorteilhafte Position gebracht werden, indem aus der Rückwand 7 des Unterteils 2 zwei Stützen 8 flügelartig ausgeklappt werden und das Notebook 1 mit den Stützen 8 auf der Stellfläche 9 abgestützt wird (Fig. 2 und 3). Die flügelartig ausklappbaren Stützen 8 sind in unterschiedlichen Positionen einrastbar, so daß die Neigung des Notebook ergonomisch optimal angepaßt werden kann.

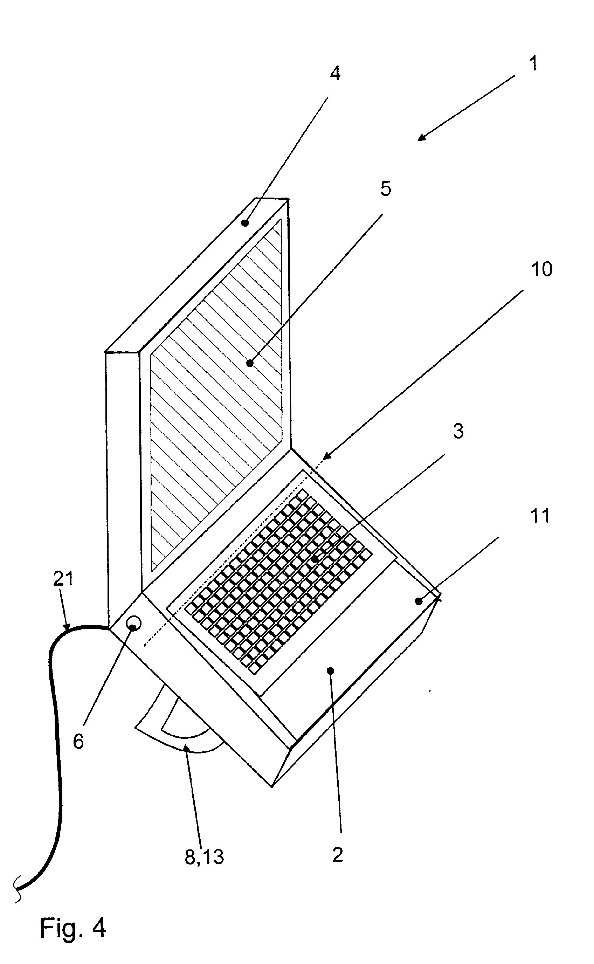

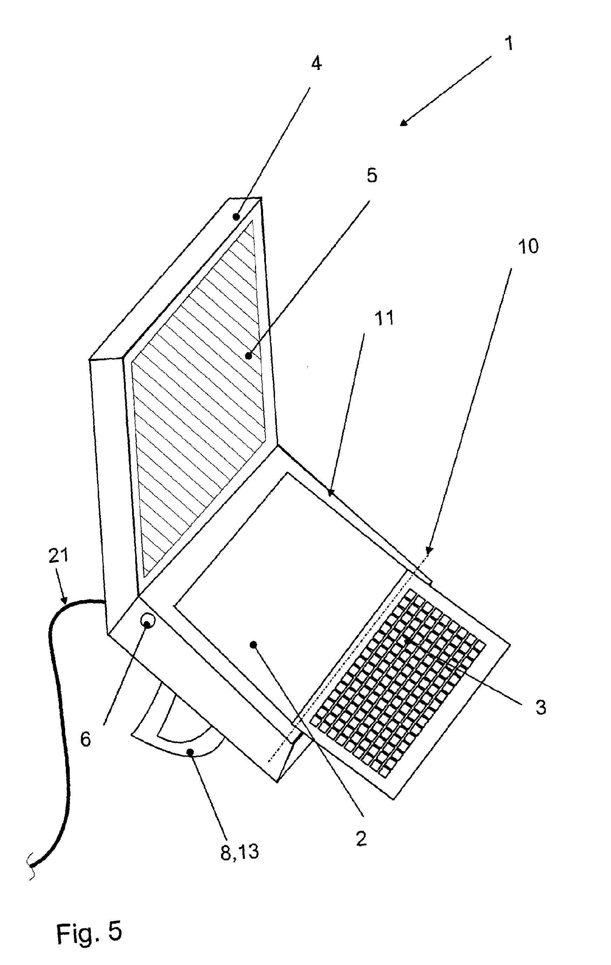

Fig. 4 und 5 zeigen eine vorteilhafte Variante, gemäß der die Tastatur 3 in einer zweiten Drehachse 10, parallel zur ersten Drehachse 6 in einer Führung 11 derart gelagert ist, daß die Tastatur 3 zum Benutzer hin aus dem Unterteil 2 herausgezogen werden kann und zweckmäßig abgewinkelt werden kann. Dies verbessert die Ergonomie und Handhabung, da bei der Eingabe die Handballen auf der Stellfläche ruhen können. Alternativ ist ein Klappmechanismus möglich, der es erlaubt, die Tastatur 3 aus dem Unterteil 2 so herauszuklappen, daß sie auf der Standfläche 9 aufliegt.

Eine andere Möglichkeit die Tastatur 3 in eine ergonomisch vorteilhafte Position zu bringen eröffnet das vollständige Herausnehmen der Tastatur 3 aus dem Unterteil 2. Die externe Tastatur kann sowohl über ein Kabel 12 mit dem Notebook 1 in Verbindung stehen, als auch die Betätigung der Tasten über Infrarot oder Funk an den Notebook 1 übertragen.

Die erfindungsgemäßen Vorteile werden ebenfalls erreicht, wenn das Notebook 1 auf einer separaten Standvorrichtung 13 angeordnet wird. Eine derartige Standvorrichtung 13 kann beispielsweise aus zwei flächigen, im wesentlichen dreieckigen Seitenteilen 14 und entsprechenden Verbindungsstreben 15 aufgebaut sein oder auch besonders robust mit einer waagerechten Grundplatte 16 und einem darauf angeordneten Gestell 17 zur Ablage des Notebooks 1 auf den geneigten Kanten 19 der Seitenteile 14. Das Notebook wird vorteilhaft durch einen Vorsprung 18 gegen ein Abrutschen aus der Schräge abgestützt.

Damit sich die von dem Notebook 1 ausgehenden Kabel 21 nicht unkontrolliert störend am Arbeitsplatz verteilen sondern ordentlich angeordnet sind, ist das Kabel 21 zweckmäßig mit an der Standvorrichtung 13 angebrachten Klettverschlüssen 20 befestigt.

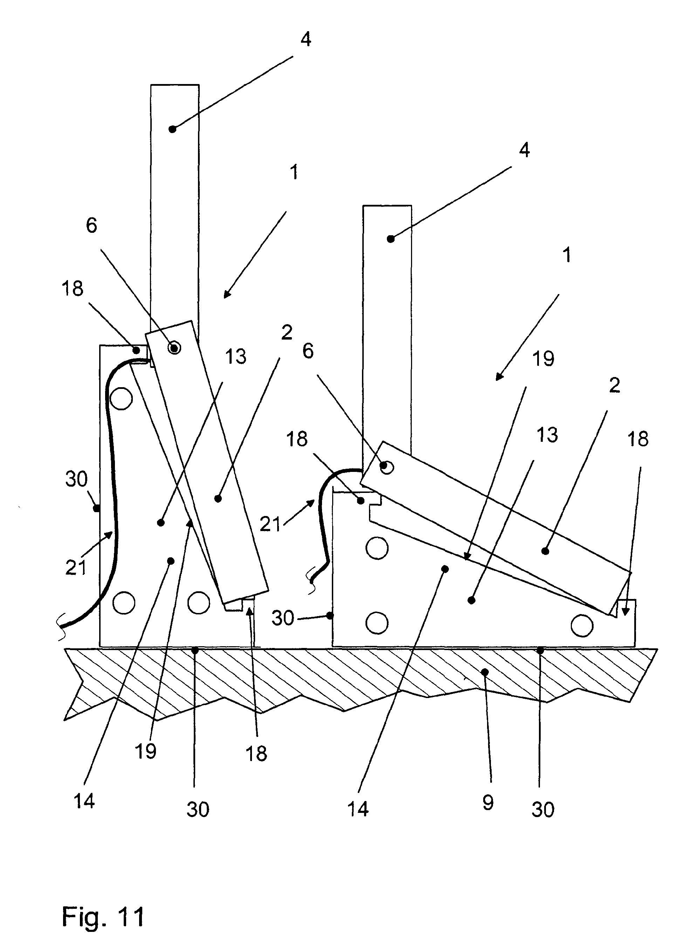

In Figur 11 ist die dargestellte Standvorrichtung 13 in der Form eines nicht gleichschenkligen Dreiecks ausgeführt, wobei die beiden Kanten 30 der dreiekkigen, flächigen Seitenteile 14, die nicht der Auflage des Notebooks 1 dienen, jeweils paarweise alternativ der Standvorrichtung 13 in Gebrauchsposition als Auflager dienen. Es ergibt sich in den beiden alternativen Stellungen jeweils ein unterschiedliches Höhenniveau und eine unterschiedliche Tastatumeigung. In der steilen Position ist der Computer - Arbeitsplatz auch für Präsentationen geeignet. Beide Enden der Kante 19 zur Auflage des Notebooks sind jeweils mit einem Vorsprung zur Anlage des Notebooks 1 in den beiden unterschiedlichen Positionen versehen.

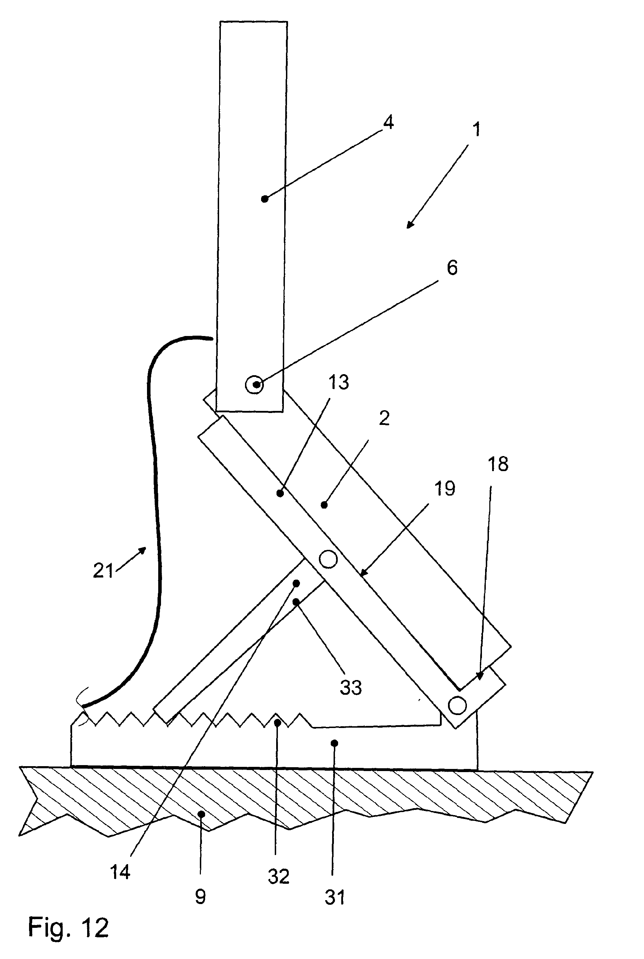

Die in Figur 12 dargestellte Standvorrichtung 13 weist eine Neigungsverstellung auf, wie sie auch häufig bei Gartenstühlen zur Anwendung kommt. Eine horizontal verlaufende Strebe 31 ist mit einer nach oben weisenden Verzahnung 32 versehen und an einem Ende mit der unteren Kante der Auflage der Standvorrichtung 13 für das Notebook 1 gelenkig verbunden. Eine Stütze 33 ist in gleicher vertikaler Ebene wie die horizontale Strebe 31 an einem Ende an der Auflage für das Notebook 1 in Abstand zu dem Gelenk der horizontalen Strebe drehbar befestigt. Die Neigung der Auflage für das Notebook 1 läßt sich bedarfsgerecht anpassen.

## Patentansprüche

1. Computer - Arbeitsplatz mit einem aufklappbaren, transportablen Computer, beziehungsweise Notebook (1), mit einem flachen, im wesentlichen rechteckigen Unterteil (2) mit Tastatur (3) und einem flachen, im wesentlichen rechteckigen Oberteil (4) mit einem Bildschirm (5) oder Display, wobei das Oberteil (4) mit dem Unterteil (2) gelenkig verbunden ist, **dadurch gekennzeichnet, daß** das Unterteil (2) mit einer Standvorrichtung (13) auf der Aufstellfläche (9) derart angeordnet ist, daß es zu einer Standfläche (9) einen Winkel zwischen 10° und 90° ausbildet, wobei das Unterteil (2) zum Oberteil (4) hin ansteigend angeordnet ist.

2. Computer - Arbeitsplatz nach Anspruch 1, **dadurch gekennzeichnet, daß** die Standvorrichtung (13) ein integraler Bestandteil des Notebooks (1) ist.

3. Computer - Arbeitsplatz nach Anspruch 2, **dadurch gekennzeichnet, daß** die Standvorrichtung (13) mindestens eine Stütze (8) umfaßt, welche in der Unterseite des Unterteils (2) des Notebooks (1) flügelartig ausklappbar angeordnet ist.

4. Computer - Arbeitsplatz nach Anspruch 1, **dadurch gekennzeichnet, daß** die Tastatur (3) beweglich im Unterteil (2) des Notebooks (1) angeordnet ist.

5. Computer - Arbeitsplatz nach Anspruch 4, **dadurch gekennzeichnet, daß** die Tastatur (3) in Richtung auf die freie Längsseite des Notebooks (1) beweglich angebracht ist.

6. Computer - Arbeitsplatz nach Anspruch 4, **dadurch gekennzeichnet, daß** die Tastatur (3) aus dem Unterteil (2) herausklappbar ausgebildet ist.

7. Computer - Arbeitsplatz nach Anspruch 4, **dadurch gekennzeichnet, daß** die Tastatur (3) aus dem Unterteil (2) herausnehmbar und extern benutzbar ausgebildet ist.

8. Computer - Arbeitsplatz nach Anspruch 7, **dadurch gekennzeichnet, daß** die Tastatur (3) die Daten der Tastenbetätigung an den Computer kabellos, insbesondere über eine Funkverbindung oder über eine Infrarotschnittstelle übertragt.

9. Computer - Arbeitsplatz nach Anspruch 7, **dadurch gekennzeichnet, daß** die Tastatur (3) mittels eines Kabels (12) mit dem Notebook (1) in Verbindung steht.

10. Computer - Arbeitsplatz nach Anspruch 1, **dadurch gekennzeichnet, daß** die Standvorrichtung (13) separater Bestandteil des Arbeitsplatzes ist.

11. Computer - Arbeitsplatz nach Anspruch 8, **dadurch gekennzeichnet, daß** die Standvorrichtung (13) eine waagerechte Grundplatte (16) umfaßt, auf welcher ein Gestell (17) die Ablage des Notebooks (1) in dem gewünschten Winkel erlaubt.

12. Computer - Arbeitsplatz nach einem der vorhergehenden Ansprüche, **dadurch gekennzeichnet, daß** die Standvorrichtung (13) zwei im wesentlichen identisch geformte, dreieckige, flächige Seitenteile (14) umfaßt, welche jeweils eine schräg zur Aufstellfläche (9) orientierte Kante (19) aufweisen, wobei das Unterteil (2) des Notebooks (1) auf diesen beiden Kanten (19) abgelegt wird.

13. Computer - Arbeitsplatz nach einem der Ansprüche 10 bis 12, **dadurch gekennzeichnet, daß** die Standvorrichtung (13) einen Vorsprung (18) zur Stabilisierung der Arbeitsposition des Notebooks (1) aufweist.

14. Computer - Arbeitsplatz nach einem der vorhergehenden Ansprüche, **dadurch gekennzeichnet, daß** die Standvorrichtung (13) Befestigungsmittel, beispielsweise Klettverschlüsse (20), zur Fixierung der von dem Notebook (1) ausgehenden Kabel (21) aufweist.

15. Computer - Arbeitsplatz nach Anspruch 12, **dadurch gekennzeichnet, daß** die dreieckigen, flächigen Seitenteile (14) jeweils als nicht gleichschenkliges Dreieck ausgebildet sind und die übrigen beiden Kanten (30) der dreieckigen, flächigen Seitenteile (14), die nicht der Auflage des Notebooks (1) dienen, jeweils paarweise alternativ der Standvorrichtung (13) in Gebrauchsposition als Auflager dienen.

16. Computer - Arbeitsplatz nach Anspruch 1, **dadurch gekennzeichnet, daß** die Standvorrichtung (13) mehrteilig ist und bedarfsgerecht für verschiedenen Winkelstellungen des Notebooks (1) zusammensetzbar ist.

17. Computer - Arbeitsplatz nach Anspruch 1, **dadurch gekennzeichnet, daß** die Standvorrichtung (13) eine längliche Verzahnung (32) aufweist, in deren Zähne sich eine Stütze (33) abstützt, welche die Auflagefläche der Standvorrichtung (13) für das Notebook (1) abstützt.
